# EUROPÄISCHE PATENTSCHRIFT

(11) **EP 0 855 758 B1**
(45) Veröffentlichungstag und Bekanntmachung des Hinweises auf die Patenterteilung: **11.12.2002**
(21) Anmeldenummer: 97116945.3
(22) Anmeldetag: 30.09.1997
(51) Int. Cl.: H01Q 1/50, H02H 9/06

(54) **Schaltungsanordnung zum Schutz von HF-Eingangskreisen von Telekommunikationsgeräten**
Circuit for the protection of RF input circuits of telecommunication devices
Circuit pour protection de circuits d'entrée HF de dispositifs de télécommunication

(30) Priorität: 27.01.1997 CH 15997
(43) Veröffentlichungstag der Anmeldung: 29.07.1998
(73) Patentinhaber: HUBER & SUHNER AG, 9100 Herisau (CH)
(72) Erfinder: Germann, Ivo, 9008 St. Gallen (CH); Meyer,Daniel, CH-9100 Herisau (CH)
(74) Vertreter: Bruderer, Werner

(56) Entgegenhaltungen:
- EP-A- 0 092 052
- EP-A- 0 151 559
- DE-A- 3 626 800
- GB-A- 2 102 218
- GB-A- 2 302 621
- US-A- 4 390 919
- US-A- 4 985 800

## Beschreibung

Die vorliegende Erfindung betrifft eine Schaltungsanordnung zur Verringerung der bei Gaskapsel-Ableitern und λ/4 shorting stub verbleibenden Restimpulse.

Elektromagnetische Impulse künstlicher Art, wie sie von Motoren, Schaltern, getakteten Netzteilen oder ähnlichem erzeugt werden können, sowie auch solche Impulse natürlichen Ursprungs, nämlich von direkten oder indirekten Blitzschlägen, werden durch induktive oder galvanische Kopplung über koaxiale Leitungen in angeschlossene Geräte geführt und können diese beschädigen oder gar zerstören. Es ist bekannt, die Geräte gegen Störspannungen oder Blitzströme an deren Eingang durch ableitende oder reflektierende Systeme zu schützen.

Bekannt geworden sind beispielsweise gasgefüllte Überspannungsableiter sowie λ/4 Kurzschlussleitungen, im englischen Sprachgebrauch auch λ/4 shorting stubs genannt, auch der Ausdruck EMP-Filter für elektromagnetische Pulse ist üblich. Mit solchen Elementen können diese schädlichen Ströme und Spannungen reduziert werden. Es verbleiben Restspannungsspitzen oder Überspannungen, so dass ein solcher Schutz für empfindliche HF-Eingangskreise von Telekommunikationsgeräten oft nicht ausreicht. Schaltungsanordnungen mit spannungsbegrenzenden Elementen, wie sie für niederfrequente Signale und Mess- und Regelkreise verwendet sind, können auf Grund ihrer Eigenkapazitäten und weiterer, für HF-Schaltungsanordnungen ungünstigen Verhaltens nicht verwendet werden.

Aus DE 36 26 800 ist beispielsweise eine Anordnung zum Schutz vor Überspannungen bekannt, welche aus einem Grobschutz in der Form eines Gasentladungs-Ableiters und einem, über ein Koaxialkabel in Serie geschalteten, Feinschutz in der Form einer Kondensator-/Dioden-Schaltung besteht. Bei dieser Anordnung muss das Koaxialkabel zwischen Grob- und Feinschutz bestimmte Leitungseigenschaften aufweisen, um die Schutzwirkung zu gewährleisten. Die Anordnung ist nur in beschränktem Ausmasse an unterschiedliche Gegebenheiten anpassbar und muss auf bestimmte HF-Übertragungs-Eigenschaften abgestimmt sein. Es können zudem erhöhte Dämpfungen des HF-Signals auftreten, welche z.B. bei Telekommunikationsanlagen nicht zulässig sind.

Es ist dementsprechend eine Aufgabe der Erfindung, solche Restspannungsspitzen oder Überspannungen wenigstens auf ein Mass zu reduzieren, dass diese für empfindliche Geräte nicht schädlich sind ohne dabei die HF-Übertragungseigenschaften zu verändern. Die entsprechende Feinschutz-Schaltungsanordnung soll in einfacher Weise an unterschiedliche Bedürfnisse anpassbar sein und dabei so entkoppelt sein, dass keine ungünstige Beeinflussung des HF-Signals resultiert. Im weiteren sollen die Bauelemente der Schaltungsanordnung direkt miteinander verbindbar sein.

Erfindungsgemäss wird dies gemäss dem kennzeichnenden Teil des unabhängigen Patentanspruchs 1 erreicht. Vorteilhafte Weiterbildungen der Erfindung ergeben sich nach den Merkmalen der abhängigen Patentansprüche.

Ein Ausführungsbeispiel der Erfindung wird nachfolgend an Hand der Zeichnung erläutert. Es zeigen:
- **Fig.1**: eine schematische Darstellung der erfindungsgemässen Schaltungsanordnung,
- **Fig.2**: ein Schema eines zusätzlichen EMP-Moduls zur Verkleinerung des Restimpulses, und
- **Fig.3**: ein Schaltungsschema des Feinschutzes für Gaskapsel-Ableiter oder λ/4 shorting stubs.

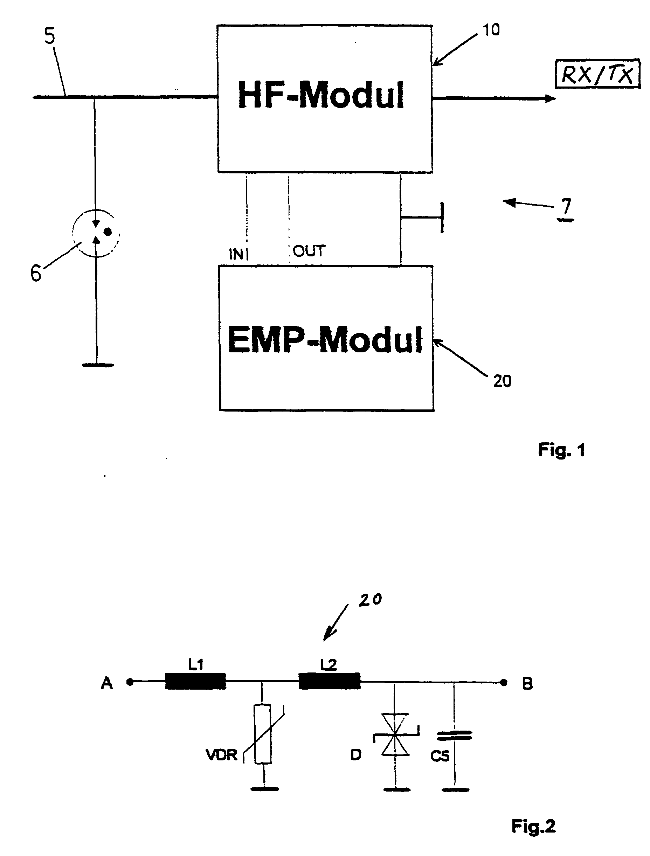

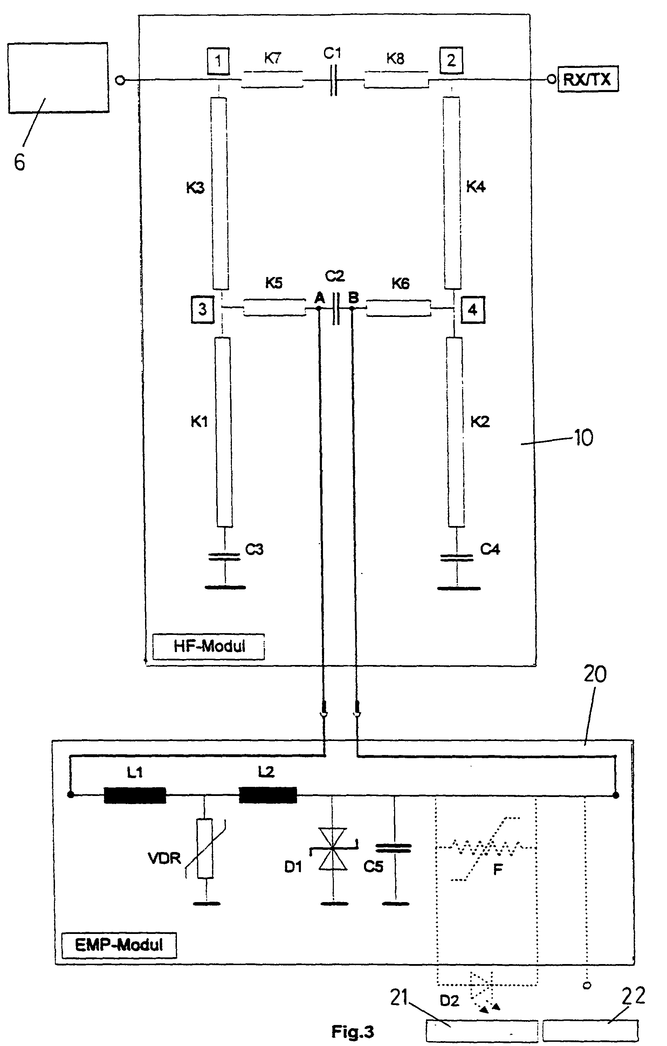

Das Grundkonzept einer erfindungsgemässen Feinschutzschaltungsanordnung für gasgekapselte Ableiter oder λ/4 shorting stubs besteht aus zwei Modulen **10,20,** wie **Fig.1** zeigt. Erstens einem HF-Modul **10** und einem EMP-Modul **20.** Das HF-Modul **10** ist in der Leitung 5 zwischen einem gasgekapselten Ableiter bzw. einem λ/4 shorting stub 6 und dem gespeisten Gerät **RX/TX** geschaltet und kann direkt mit diesem verbunden sein. Es besteht in der vorgeschlagenen und in zu Figur 3 beschriebenen Bauart aus einem Entkopplungsnetzwerk, das dafür zu sorgen hat, dass das EMP-Modul **20** sich nicht auf die HF-Eigenschaften der gesamten Schaltungsanordnung auswirkt. So kann das EMP-Modul **20** mit beliebigen Bauteilen, auch solchen die HF-technisch ungünstig sind gebaut werden.

Das EMP-Modul **20** seinerseits ist verantwortlich für die Restpulsverkleinerung und umfasst Bauteile, wie Varistoren, Dioden und Entkoppelspulen, wie später genauer erläutert wird.

Der Vorteil einer solchen Modulbauweise ist in der damit erreichten Variantenvielfalt zu sehen. Wenn die Verbindungen zwischen den Modulen **10** und **20** mittels Steckverbindern ausgeführt ist, kann je nach Bedürfnis auf einfache Art und Weise die gewünschte Schaltungsanordnung aufgebaut werden. Beispielsweise lässt sich die Feinschutz-Schaltungsanordnung 7 auch ohne Gaskapsel-Ableiter 6 bzw. λ/4 shorting stub zum Schutz gegen ESD (Electrostatic Damage), Surge oder Burst verwenden, beispielsweise zu Prüfzwecken.

**Fig.2** zeigt ein Schaltungsschema eines EMP-Moduls **20**. Dieses Modul **20** dient der Reduzierung von kurzzeitigen Überspannungen und Abführung von Überströmen gegen Erde. Wie in der Figur dargestellt sind zwei in Reihe geschaltete Spulen bzw. Induktivaktivitäten **L1** und **L2** zwischen zwei Anschlüsse **A** und **B** geschaltet.

Zwischen den beiden Spulen **L1**,**L2** ist ein Anschluss für einen Varistor **VDR** vorgesehen, der gegen Erde geschaltet ist. Zwischen der zweiten Spule **L2** und dem Anschluss **B** sind parallel zueinander eine Schutzdiode **D** und ein Kondensator **C5** gelegt, deren zweite Anschlüsse ebenfalls an Erde angeschlossen sind.

Der Varistor **VDR** und die Schutzdiode **D** dienen der Begrenzung von kurzzeitig anstehenden Spannungen und dienen daher nach dem Gaskapsel-Ableiter 6 als zweite und dritte Schutzstufe. Damit diese Schutzstufen in zeitlich richtiger Reihenfolge ansprechen, sind sie durch die Entkopplungsinduktivitäten **L1** und **L2** voneinander getrennt.

Die Schaltungsanordnung gemäss **Fig. 3** zeigt den Zusammenbau von HF-Modul **10** und EMP-Modul **20.** Das HF-Modul 10 ist derart aufgebaut, dass die HF-Eigenschaften unabhängig vom Aufbau und der Schaltungsanordnung des daran angeschlossenen EMP-Moduls 20 sind. Das EMP-Modul 20 ist vom HF-Kreis abgekoppelt.

Diese Schaltungsanordnung zeigt einen Vierpol, bei dem zwei gegenüberliegende Äste je aus einer Reihenschaltung zweier Leitungen **K5,K6,K7,K8** und einer dazwischen geschalteten Kapazität **C1,C2** bestehen und von denen der eine Ast **K7,C1,K8** in der HF-Leitung liegt und der andere Ast **K5,C2,K6** mit einer Reihenschaltung einer Leitung **K1,K2** und einer Kapazität **C3,C4** mit Masse verbunden ist. Die Endpunkte **1,2,3,4** der beiden Reihenschaltungen **K5,C2,K6,K7,C1,K8** sind miteinander durch je eine Leitung **K3,K4** verbunden. Beidseits der Kapazität C2 sind Anschlüsse A, B für das EMP-Modul 20 in dem anderen Ast K5, C2, K6 angeordnet.

Die Kapazität **C3** bzw. **C4** wird über eine Leitung **K1** bzw. **K2** auf einen Kurzschluss an Knoten **3** bzw. Knoten **4** transformiert. Somit sieht die Leitung **K3,** bzw. **K4** an ihrem Ende eine Parallelschaltung der Impedanz des EMP-Moduls **20** und der Impedanz **Z** = 0 Ω. Damit wird erreicht, dass unabhängig von der Impedanz des EMP-Moduls eine Gesamtimpedanz **Z** = 0 Ω an den Knoten **3** bzw **4** gebildet ist.

Diese Gesamtimpedanz **Z** = 0 Ω wird über die Leitung **K3** bezw **K4** zu einer Impedanz von theoretisch **Z** = ∞ Ω am Knoten **1** bezw. am Knoten **2** transformiert.

Das Netzwerk des HF-Moduls **10** zusammen mit dem EMP-Modul **20** verhält sich somit gleich einer Kaskadierung von zwei λ/4-Resonatoren. Wesentlich dabei ist, dass dieses Verhalten nicht davon abhängt, wie gross die Impedanz des EMP-Moduls 20 ist.

In der Beschreibung des HF-Moduls **10** wurde gezeigt, dass die Impedanz des EMP-Moduls **20** nicht die Gesamtschaltung beeinträchtigt. Daher kann das EMP-Modul **20** auf verschiedene Arten beschaltet werden, um den unterschiedlichsten Wünschen gerecht zu werden.

Somit könnte über einen DC-Anschluss 22 am EMP Modul **20** ein Gleichstrom auf die HF-Leitung eingespeist werden, wie er auch für die Speisung von aktiven Antennen benötigt wird. Auch könnte der Schutz der Bauteile gegenüber falschen Betriebsspannungen und insbesondere gegenüber Kurzschluss mit einer Sicherung **F** am Ende der Schaltung des EMP-Moduls **20** gewährleistet werden. Eine solche Sicherung kann eine Schmelzsicherung oder ein rücksetzbarer PTC-Widerstand sein. Auch wäre es denkbar, mit Leuchtdioden **D2** bzw. einer Fehleranzeige 21 die Bauteile auf einwandfreie Funktion zu kontrollieren.

## Patentansprüche

1. Schaltungsanordnung in HF-Eingangskreisen, zur Verringerung der bei Gaskapselableitern oder λ/4-Ableitern (6) verbleibenden Restpulse, umfassend eine Leitung (5), einen in die Leitung (5) geschalteten Gaskapsel- oder λ/4-EMP-Ableiter (6) und eine in Serie zum EMP-Ableiter (6) in die Leitung (5) geschaltete Feinschutzschaltung (7), **dadurch gekennzeichnet, dass** die Feinschutzschaltung (7) aus einem HF-Modul (10) und einem parallel zu diesem HF-Modul (10) geschalteten zusätzlichen EMP-Modul (20) besteht, wobei das zusätzliche EMP-Modul (20) vom HF-Kreis des HF-Moduls (10) abgekoppelt ist.

2. Schaltungsanordnung nach Patentanspruch 1, **dadurch gekennzeichnet, dass** das HF-Modul (10) ein Leitungsnetzwerk in der Form eines Vierpols ist, wobei zwei gegenüberliegende Äste je aus einer Reihenschaltung zweier Leitungen (K5, K6, K7, K8) und einer dazwischen geschalteten Kapazität (C1, C2) bestehen und von denen der eine Ast (K7, C1, K8) in der HF-Leitung liegt und der andere Ast (K5, C2, K6) mit einer Reihenschaltung einer Leitung (K1,K2) und einer Kapazität (C3, C4) mit Masse verbunden ist, und dass die Endpunkte (1, 2, 3, 4) der beiden Reihenschaltungen (K5, C2, K6, K7, C1, K8) miteinander durch je eine Leitung (K3, K4) verbunden sind und dass im anderen Ast (K5, C2, K6) Anschlüsse (A, B) für das zusätzliche EMP-Modul (20) angeordnet sind.

3. Schaltungsanordnung nach Patentanspruch 1 oder 2, **dadurch gekennzeichnet, dass** das zusätzliche EMP-Modul (20) einen Restimpulsableiter bildet und eine Reihenschaltung zweier Induktivitäten (L1, L2) ist, deren gemeinsamer Anschluss an einen gegen Erde geschalteten Varistor (VDR) angeschlossen ist und eine durch eine der beiden Induktivitäten (L2) davon getrennte Parallelschaltung einer spannungsbegrenzenden Diode (D1) und eines Kondensators (C5), die beide gegen Erde geschaltet sind, umfasst.

4. Schaltungsanordnung nach Patentanspruch 2 oder 3, **dadurch gekennzeichnet, dass** das zusätzliche EMP-Modul (20) parallel zum Kondensator (C2) in dem zur Leitung (5) der Signale parallelen Ast (K5, C2, K6) des Vierpols geschaltet ist.

## Claims

1. Circuit arrangement in RF input circuits, for reducing the residual pulses which remain in the case of gas-capsule arresters or quarter-wave arresters (6), comprising a line (5), a gas-capsule arrester or quarter-wave EMP arrester (6) connected into the line (5), and a fine-protection circuit (7) connected into the line (5) in series relative to the EMP arrester (6), **characterized in that** the fine-protection circuit (7) consists of an RF module (10) and an additional EMP module (20), connected in parallel to this RF module (10), the additional EMP module (20) being decoupled from the RF circuit of the RF module (10).

2. Circuit arrangement according to Claim 1, **characterized in that** the RF module (10) is a line network in the form of a quadripole, two opposing branches each consisting of a series connection of two lines (K5, K6, K7, K8) and an intermediately connected capacitor (C1, C2), and of which the one branch (K7, C1, K8) being located in the RF line and the other branch (K5, C2, K6) being connected to earth by means of a series connection of a line (K1, K2) and a capacitor (C3, C4), and the end points (1, 2, 3, 4) of the two series connections (K5, C2, K6, K7, C1, K8) are each interconnected by a line (K3, K4), and connections (A, B) for the additional EMP module (20) are disposed in the other branch (K5, C2, K6).

3. Circuit arrangement according to either of Claims 1 o r 2, **characterized in that** the additional EMP module (20) forms a residual pulse arrester and is a series connection of two inductors (L1, L2) whose common connection is connected to a varistor (VDR) which is connected to earth, and comprises a parallel connection, separated from the varistor (VDR) by one of the two inductors (L2), of a voltage-limiting diode (D1) and a capacitor (C5), both of which are connected to earth.

4. Circuit arrangement according to either of Claims 2 or 3, **characterized in that** the additional EMP module (20) is connected in parallel to the capacitor (C2) in the branch (K5, C2, K6) of the quadripole which is parallel to the signal line (5). Translator's Note
In the German text of which this English text is a translation, the German terms 'Kapazität' and 'Kondensator' are both used, apparently to mean 'capacitor'. The term 'Kapazität' is used almost exclusively for references C1, C2, C3, C4 (with the exception of Claim 4, where 'Kondensator' is used in connection with the reference C2), and 'Kondensator' is used for the reference C5.
The translation of these two terms may differ, according to context: 'Kondensator' is translated as 'capacitor' (i.e., a component of an electric circuit); 'Kapazität' is translated as 'capacitance' when referring to this property of a component. However, it can also be translated as 'capacitor' (i.e., being synonymous with 'Kondensator') when referring to the actual component in an electric circuit. In Figures 2 and 3 accompanying the text, the symbols used for references C1, C2, C3, C4 and C5 are those for capacitors, i.e., the components themselves. In the English text, therefore, both 'Kondensator' and 'Kapazität' have been translated as 'capacitor' except where the context clearly indicates reference to the property of capacitance: thus, the compound 'Eigenkapazitäten' (German text page 2, line 5) has been translated as 'inherent capacitances'.
A similar duality of meaning exists in the case of the German 'Induktivität', which can mean 'inductance' when referring to that property and 'inductor' when referring to a component. In the English, the term 'inductor' has been used, as the description and figures indicate that 'Induktivität' refers to two (induction) coils, i.e. actual components, references L1 and L2.

## Revendications

1. Circuiterie dans des circuits d'entrée H.F., pour réduire les impulsions résiduelles rémanentes dans le cas de parafoudres à capsule gazeuse ou de parafoudres (6) quart d'onde (λ/4), comprenant une ligne (5), un parafoudre à capsule gazeuse ou un parafoudre pour EMP (impulsions électromagnétiques) (6) monté sur la ligne (5) et un montage de protection fine monté sur la ligne (5) en série avec le parafoudre pour EMP (6), **caractérisée en ce que** le montage de protection fine (7) comprend un module H.F. (10) et un module pour EMP (20) supplémentaire est monté en parallèle avec ce module H.F. (10), le module pour EMP (20) supplémentaire étant désaccouplé du circuit H.F. du module H.F. (10).

2. Circuiterie selon la revendication 1, **caractérisée en ce que** le module HF (10) est un réseau de lignes sous la forme d'un quadripôle, deux branches se faisant face comprenant chacune un montage en série de deux lignes (K5, K6, K7, K8) et une capacité (C1, C2) intercalée et dont une branche (K7, C1, K8) est disposée dans la ligne H.F. et l'autre branche (K5, C2, K6) est reliée à un montage en série d'une ligne (K1, K2) et d'une capacité (C3, C4) avec masse, et **en ce que** les points d'extrémité (1, 2, 3, 4) des deux montages en série (K5, C2, K6, K7, C1, K8) sont reliés entre eux à chaque fois par une ligne (K3, K4) et **en ce que** des branchements (A, B) destinés au module pour EMP (20) supplémentaire sont disposés dans l'autre branche (K56, C2, K6).

3. Circuiterie selon la revendication 1 ou 2, **caractérisée en ce que** le module pour EMP (20) supplémentaire forme un parafoudre pour impulsion résiduelle et est un montage en série de deux inductances (L1, L2), dont le branchement commun est raccordé à un varistor (VDR) branché vers la terre et comprend un montage en parallèle, séparé par l'une des deux inductances (L2), d'une diode (D1) limitant la tension et d'un condensateur (C5), qui sont branchés tous deux vers la terre.

4. Circuiterie selon la revendication 2 ou 3, **caractérisée en ce que** le module pour EMP (20) supplémentaire est monté en parallèle avec le condensateur (C2) dans la branche (K5, C2, K6), parallèle à la ligne (5) des signaux, du quadripôle.
